Europäisches Patentamt

European Patent Office

Office européen des brevets

Veröffentlichungsnummer: **0 297 395**

A2

# EUROPÄISCHE PATENTANMELDUNG

Anmeldenummer: 88109833.9

Int. Cl.[4] **C08L 21/00 , C08L 69/00**

Anmeldetag: **21.06.88**

Priorität: **01.07.87 DE 3721766**

Veröffentlichungstag der Anmeldung:
**04.01.89 Patentblatt 89/01**

Benannte Vertragsstaaten:
**AT BE CH DE ES FR GB IT LI NL**

Anmelder: **BAYER AG**
**Konzernverwaltung RP Patentabteilung**
**D-5090 Leverkusen 1 Bayerwerk(DE)**

Erfinder: **Scholl, Thomas, Dr.**
**Witzfeldstrasse 47a**
**D-4005 Meerbusch 1(DE)**
Erfinder: **Perrey, Hermann, Dr.**
**Auf der Rheinaue 8**
**D-4150 Krefeld 11(DE)**
Erfinder: **Matner, Martin, Dr.**
**Dorfstrasse 14**
**D-5068 Odenthal(DE)**

Mischungen aus Elastomer-Latices und Dispersionen von aromatischen Polycarbonaten, Polyestern oder Polyestercarbonaten sowie daraus hergestellte Produkte.

Die vorliegende Erfindung betrifft Mischungen von mindestens einem Elastomer-Latex mit mindestens einer Dispersion eines aromatischen Polycarbonats, aromatischen Polyesters oder aromatischen Polyestercarbonats.

EP 0 297 395 A2

**Mischungen aus Elastomer-Latices und Dispersionen von aromatischen Polycarbonaten, Polyestern oder Polyestercarbonaten sowie daraus hergestellte Produkte**

Die vorliegende Erfindung betrifft Mischungen von mindestens einem Elastomer-Latex (I) mit mindestens einer Dispersion (II) eines aromatischen Polycarbonats, aromatischen Polyesters oder aromatischen Polyestercarbonats.

Die erfindungsgemäßen Elastomer-Komponenten (I) sind wäßrige Dispersionen von Homo- und oder Copolymeren vorzugsweise radikalisch polymerisierbarer ungesättigter Monomerer.

Geeignete Elastomer-Komponenten (I) sind neben Naturkautschuk-Latices durch Polymerisation üblicher olefinisch ungesättiger Monomere in wäßriger Emulsion erhaltene synthetische Latices. Als Monomere kommen alle radikalisch polymerisierbaren olefinisch ungesättigten Verbindungen in Frage, z.B. Mono- und Diolefine, wie Ethylen, Propylen. Butadien. Isopren, 2-Chlorbutadien-1.3, Styrol, Vinyltoluol, α-Methylstyrol, Chlorstyrol, Vinlysulfonsäure und Divinylbenzol, Vinylhalogenide, wie Vinylchlorid und Vinylidenchlorid, Vinylester geradkettiger oder verzweigter aliphatischer Carbonsäuren, wie Vinylacetat, -propionat, -n-butyrat, -pivalat, -laurat und -stearat, Vinylether, wie Vinylmethyl-, -ethyl-, -n-butyl- und -sek.-butylether, Ester der Acryl- und Methacrylsäure von Mono- oder Polyolen, wie Methylacrylat und -methacrylat, Ethylacrylat- und methacrylat, Butylacryiate und -methacrylate, hexylacrylate und -meth-acrylate, 2-Ethylhexyl-acrylat und -methacrylat, n-Decylacrylat und -methacrylat, n-Dodecylmethacrylat, Glykol-mono-acrylat und -methacrylat, Butandiol-1.4-acrylat und -methacrylat, Ethylenglykol-bis-acrylat und -methacrylat und Trimethylolpropan-tris-acrylat und -tris--methacrylat, Diester und Halbester ungesättigter Dicarbonsäuren, wie Malein-, Fumar- und Itaconsäure-di-und -mono-methyl-, -ethyl-, -butyl- und -hexylester, α,β-ungesättigte Di- und Monocarbonsäuren, wie Acryl-, Methacryl-, Croton-, Malein-, Fumar- und Itaconsäure, Amide, Methylolamide und Alkoxymethylamide dieser α,β-ungesättigten Di- und Monocarbonsäuren, wie Acrylamid, Methacrylamid, Maleinsäureamid, Maleinsäureimid, Methylen-bis-acryl- und -methacrylamid, N-Methylolacryl-und -methacrylamid, N-Methoxymethylacryl-und -meth-acrylamid, Allylverbindungen, wie Diallylphthalat und heterocyclische Verbindungen, wie N-Vinylphthalimid, N-Vinylpyrrolidon und N-Vinylimidazol. Die Monomeren können allein oder in Kombination miteinander eingesetzt werden.

Die Polymerisation obiger Monomeren kann in Gegenwart von Emulgatoren durchgeführt werden, wobei die üblichen nichtionischen oder ionischen Emulgiermittel allein oder in Kombination miteinander verwendet werden können. Die Gesamtmenge an Emulgator kann ca. 0,1 bis 10 Gew.-%, bezogen auf die Monomeren, betragen.

Die Emulsionspolymerisation kann mit Radikalbildnern, vorzugsweise mit organischen Peroxidverbindungen, ausgelöst werden, die in Mengen von 0,01 bis 2 Gew.-%, bezogen auf Monomere, eingesetzt werden. Je nach Monomerkombination können zur Erniedrigung des Molekulargewichtes des Polymerisats geringe Mengen an Reglern mitverwendet werden, z.B. Mercaptane, Halogenkohlenwasserstoffe. Die Emulsionspolymerisation ist auf zwei Wegen möglich: Mann kann die Gesamtmenge der Monomeren und den größten Teil der die Emulgatoren enthaltenden wäßrigen Phase vorlegen, die Polymerisation durch Zugabe des Initiators starten und im Verlauf der Polymerisation den Rest der wäßrigen Phase kontinuierlich oder absatzweise zugeben. Man kann auch die Technik des "Monomerenzulaufs" benutzen; dabei wird nur ein Teil der Monomeren und der das Emulgiermittel enthaltenden wäßrigen Phase vorgelegt und nach Starten der Polymerisation der Rest der Monomeren und der wäßrigen Phase gleichmäßig oder absatzweise nach Maßgabe des Umsatzes zugefügt. Der zudosierte Monomerenanteil kann in der wäßrigen Phase voremulgiert sein. Beide Verfahren sind bekannt.

Geeignete Komponenten (II) sind wäßrige Dispersionen von aromatischen Polycarbonaten, aromatischen Polyestern und aromatischen Polyestercarbonaten. Bevorzugte wäßrige Dispersionen enthalten thermoplastische aromatische Polycarbonate, die durch Umsetzung von Diphenolen, insbesondere von Dihydroxydiarylalkanen, mit Phosgen oder Diestern der Kohlensäure erhalten werden, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Kettenabbrecher dienen beispielsweise Monophenole. Als Verzweiger beispielsweise Trisphenole oder Tetraphenole.

Die Polycarbonate haben mittlere Molekulargewichte $M_w$ (Gewichtsmittel) zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 g/pro 100 ml.

Geeignete Diphenole sinde z.B. Hydrochinon, Resorcin, 4,4´-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkylene wie beispielsweise $C_5$-$C_{15}$-Cycloalkylen- bzw. $C_5$-$C_{15}$-Cycloalkylidenbisphenole, Bis-(hydroxy-phenyl)-

2

sulfide, -ether, -ketone, -sulfoxide oder -sulfone. Ferner α,α'-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2,2 (Bisphenol A), Bis-(4-hydroxy-3,5-dichlorphenyl)-propan-2.2 (Tetrachlorbisphenol A), Bis-(4-hydroxy-3,5-dibromphenyl)-propan-2,2 (Tetrabrombsphenol A), Bis-(4-hydroxy-3,5-dimethylphenyl)-propan-2,2 (Tetramethylbisphenol A), Bis-(4-hydroxyphenyl)-cyclohexan-1,1 (Bisphenol Z) sowie auf Basis von Dreikernbisphenolen wie α,α'-Bis-(4-hydroxyphenyl)-p-diisopropylbenzol. Weitere geeignete Diphenole sowie die Herstellung der Polycarbonate sind beispielsweise in den US-Patenten 30 28 365. 30 62 781 und 38 79 347 beschrieben.

Bevorzugte wäßrige Dispersionen (II) enthalten auch thermoplastische aromatische Polyester auf Basis von Diphenolen. Terephthal- und Isophthalsäuredichloriden (Säurechloridverhältnis 7:3 bis 3:7, vorzugsweise 1:1), Kettenabbrechern und gegebenenfalls Verzweigungsmitteln. Als Diphenole. Kettenabbrecher und Verzweiger dienen die für die Polycarbonatherstellung vorstehend genannten Verbindungen.

Die Herstellung der aromatischen Polyester erfolgt aus den Gemischen der Säurechloride. Diphenolen, Kettenabbrechern und gegebenenfalls Verzweigern nach dem Verfahren der Phasengrenzflächenpolykondensation. Die relative Lösungsviskosität der erfindungsgemäß zu stabilisierenden aromatischen Polyestern soll zwischen 1,18 und 2,0, vorzugsweise zwischen 1,2 und 1,5 (gemessen in einer $CH_2$-$Cl_2$-Lösung bei $25°$C und einer Konzentration von 0,5 g, pro 100 ml) betragen.

Die erfindungsgemäßen Mischungen aus Elastomer-(I) und Thermoplastidspersionen (II) enthalten 0,1 bis 50 Gew.-% an Thermoplast bezogen auf Gesamtfeststoffgehalt. Besonders bevorzugte erfindungsgemäße Mischungen enthalten 1 bis 25 Gew.-% an Thermoplast bezogen auf Gesamtfeststoffgehalt.

Die erfindungsgemäßen Mischungen aus Elastomer-Latices (I) und Dispersionen (II) aromatischer Polycarbonate, aromatischer Polyester und Polyestercarbonate sind lagerstabil und eignen sich zur Herstellung von Produkten mit besseren mechanischen Eigenschaften wie z.B. erhöhte Weiterreißfestigkeit und erhöhter Strukturfestigkeit sowie größerer Alterungsbeständigkeit als sie aus herkömmlichen Kautschuk-Latices herstellbar sind.

Die japanische Patentschrift J 7 4031 537 beschreibt Dental-Abdruckmassen, hergestellt aus Mischungen von SBR-Latices mit mindestens einer Thermoplast-Dispersion durch Koagulation mit anorganischen Elektrolyten. Als Thermoplast-Dispersion wurde u.a. auch eine Polycarbonatdispersion erwähnt. Die Vorteile der genannten Dental-Abdruckmassen beziehen sich auf eine höhere Dimensionsstabilität.

Es wurde in J 7 4031 537 jedoch nicht gefunden, daß sowohl Koagulationsprodukte als auch Vulkanisationsprodukte aus Elastomerlatices und insbesondere Polycarbonat, aromatischen Polyestercarbonaten und aromatischen Polyestern höhere Alterungsbeständigkeit, höhere Wieterreißfestigkeiten und höhere Strukturfestigkeiten aufweisen.

Zur Herstellung der erfindungsgemäßen Mischungen von Elastomer-(I) und Thermoplast-Dispersion (II) geht man bevorzugt von Elastomerdispersionen der Reihe Naturlatex (NR) oder wäßriger, kolloidaler Dispersionen der Mischpolymerisate aus Styrol und Butadien (SBR), aus Styrol, Butadien und Acrylnitril (N SBR), aus Styrol, Butadien und Methacrylsäure (X SBR), aus Styrol, Butadien, Acrylnitril und Methacrylsäure (XNSBR), aus Acrylnitril und Butadien (NBR), aus Acrylnitril, Butadien und Methacrylsäure (X NBR), aus 1-Chlor-butadien und Methacrylsäure (XCR), aus 2-Chlorbutadien und Dichlorbutadien (CR) oder dem Homopolymerisat aus 2-Chlorbutadien (CR) aus und mischt diese mit Dispersionen (II) von aromatischen Polycarbonaten, aromatischen Polyestern und aromatischen Polyestercarbonaten, vorzugsweise bei Temperaturen von 10 bis $50°$C.

Wäßrige Dispersionen (II) von aromatischen Polycarbonaten, aromatischen Polyestern und aromatischen Polyestercarbonaten können aber auch als wäßrige Phase in der Emulsionspolymerisation zur Herstellung der Elastomerkomponente (I) dienen. Die Abmischung von Komponente (I) und Komponente (II) erfolgt also gleichermaßen in "statu nascendi".

Zur Herstellung von stabilem Polycarbonat und aromatischen Polyestercarbonat-Dispersionen legt man eine Lösung des Thermoplasten vor. Als Lösungsmittel eignen sich z.B. Methylenchlorid, Chloroform, Chlorbenzol etc. Diese Lösung wird anschließend mit einer wäßrigen Lösung eines Schutzkolloids (z.B. Polyvinylalkohol, Polyvinylpyrrolidon, Methylcellulose, partiell hydrolysiertem Polyvinylacetat) bevorzugte Konzentration 1 bis 10 Gew.-% sowie gegebenenfalls weiterer Tensiden (z.B. Alkylsulfonate, Alkylbenzolsulfonate, Alkoholsulfate, alkoxylierte Fettalkohole und -amine, alkoxylierte Alkylphenole etc.) versetzt und mit Hilfe üblicher Dispergiergeräte (Ultraturrax, Dissolver, Scherspaltdissolver etc.) dispergiert. Anschließend entfernt man das organische Solvens durch Erhitzen, gegebenenfalls, im schwachen Vakuum.

Gegenstand der vorliegenden Erfindung sind auch die aus den neuen Dispersionen zu erhaltenen Koagulate und die daraus durch Vernetzung zu gewinnenden Vulkanisate.

Beide Produkte zeigen gegenüber den unvernetzten bzw. vernetzten Koagulaten aus reinen Elastomer-Dispersionen überraschenderweise deutlich bessere mechanische und chemische Eigenschaften sowie eine deutliche Verbesserung der Alterungsbeständigkeit.

Die neuen Mischungen aus Elastomer- und Thermoplast-Dispersionen eignen sich u.a. zur Herstellung von Tauchartikeln. Imprägnierungen. Beschichtungen und Kaschierungen von Gewebe und Papier: Bindemittel für tierische. pflanzliche und synthetische Fasern. Modifizierungen von bituminösen Massen für Straßenbaubeläge. Bautenschutz und Schutzanstriche. Klebstoffe. Verschlußmassen und als Bindemittel für Reibbeläge.

Die Prozentangaben der nachfolgenden Beispiele beziehen sich auf das Gewicht.

Beispiel 1

Herstellung einer wäßrigen Polycarbonatdispersion

3000 g einer 20 %igen Lösung eines aromatischen Polycarbonats auf Basis Bisphenol A ($M_w$ 28 000) in Methylenchlorid wird unter intensivem Rühren (Dissolver. 1000 UpM) erst mit 600 g einer 5 %igen Lösung von Polyvinylalkohol ($M_w$ 70 000) und darauf mit 777 g Wasser und 12 g Na-Dodecylbenzolsulfonat versetzt. Anschließend dispergiert man weitere 8 bis 10 Minuten bei 8000 UpM. Nach Abdestillieren des Methylenchlorids bei 45° C unter Normaldruck erhält man ca. 1350 g einer 42.6 %igen Dispersion mit einer mittleren Teilchengröße unter 1 $\mu$m. Die Dispersion zeigt nach einem Monat keine Sedimentation.

Beispiel 2

Herstellung einer wäßrigen Polyestercarbonatdispersion 400 g einer 20 %igen Lösung eines aromatischen Polyestercarbonats, bestehend aus 50 Gew.-% aromatischem Polycarbonat auf Basis Bisphenol A und 50 Gew.-% aromatischem Polyester auf Basis Bisphenol A und Terephthal-Isophthalsäure in Methylenchlorid wird unter intensivem Rühren analog dem Verfahren von Beispiel 1 mit 120 g 5 %igem Polyvinylalkohol ($M_w$ 70 000) und späterem Zusatz von 17.3 g Wasser und 1.6 g Na-dodecylbenzolsulfonat erst bei 1000 UpM später ca. 8 bis 10 Minuten bei 7000 UpM mit dem Dissolver dispergiert. Nach dem Abdestillieren des Methylenchlorids und Filtration (30 000 mesh) resultieren ca. 200 g einer 40 %igen Dispersion mit einem mittleren Teilchendurchmesser (1 $\mu$m. Die Dispersion zeigt nach einem Monat Lagerung keine Sedimentation.

Beispiel 3

Eine auf einer Papiermaschine hergestellte Pappe aus $\alpha$-Cellulose von einer Dicke von 2.2 mm wird mit folgenden zwei Polymerdispersionen verfestigt:

A) Handelsübliche Polychloroprendispersion (Feststoffgehalt: 58%)

B) Gemisch aus 155.2 Gew.-Tle von Dispersion A) und 23.5 Gew.-Tle der unter Beispiel 1 beschriebenen Polycarbonat-Dispersion.

Die getrockneten Pappen besitzen ein Faser Polymer-Verhältnis von 70/30.

Die Messung der Spaltfestigkeit (interbonding) der Pappen mit Hilfe eines Instron-Geräts (Modell 1026) ergibt folgendes Ergebnis (N/cm):

|  | Längsrichtung | Querrrichtung |
|---|---|---|
| Latex A | 4,6 | 3,5 |
| Latex B | 6,6 | 6,1 |

Die mit den Latices A und B verfestigten Pappen werden in Heißluft bei 105° C 14 Tage lang gelagert. Visuelle Beurteilung der Pappen nach der Alterung:

Pappe A: Stark braun verfärbt und versprödet (bricht beim Knicken)

Pappe B: Schwach gelb verfärbt und noch flexibel

4

Beispiel 4

Aus den in Beispiel 3 beschriebenen Latices A und B werden durch Antrocknen auf Tonplatten bei Raumtemperatur Kautschukfilme hergestellt. Bei einem Vergleich der Weiterreißfestigkeiten der Filme (gemessen nach ASTM 624 C) erhält man folgendes Ergebnis:

Latex A 15,5 N• mm⁻¹

Latex B 23,7 N • mm⁻¹

Beispiel 5

Die unter Beispiel 3 beschriebenen Polymerdispersionen A und B werden mit folgender Vulkanisationspaste versetzt:

7,5 Gew.-Tle Zinkoxid

2,0 Gew.-Tle Diphenylthioharnstoff

1,0 Gew.- Tle Diphenylguanidin

1,0 Gew.- Tle Kolloidschwefel

2,0 Gew.-Tle Alterungsschutzmittel

(bezogen auf 100 Gew.-Tle Polymer). Mit Hilfe einer Porzellanform wird durch Tauchen nach dem sogenannten Vortauchverfahren aus den beiden Latices ein Gummihandschuh hergestellt. Die Handschuhe besitzen folgende Weiterreißfestigkeiten (gemessen nach ASTM 624 C).

|         | N/mm |
|---------|------|
| Latex A | 18,7 |
| Latex B | 32,2 |

Beispiel 6

Eine Polymerdispersion auf Basis eines carboxylierten Acrylnitril-Butadien-Polymerisates mit einem Feststoffgehalt von 45% (Latex C) und eine Mischung aus 177,9 Gew.-Tlen von Latex C und 44,4 Gew.-Tlen der unter Beispiel 2 beschriebenen Polycarbonatdispersion (Latex D) werden mit folgender Vulkanisationspaste versetzt:

1,5 Gew.-% Zinkoxid

1,5 Gew.-% Kolloidschwefel

0,6 Gew.-% Zinksalz des Diethyldithiocarbamats

0,4 Gew.-= Zinksalz des Pentamethylendithiocarbamats

0,4 Gew.-% Zink-mercaptobenzthiazol

2,0 Gew.-% Titandioxid

(bezogen auf 100 Gew.-Tle Polymer).

Aus diesen Mischungen werden durch Eintauchen von porösen Porzellanplatten Kautschukfilme hergestellt.

Diese werden nach dem Trocknen bei 130°C 20 Minuten bei 105°C vulkanisiert. Durch Einlegen in drei unterschiedliche Lösungsmittel werden sie in ihrer Lösungsmittelresistenz verglichen.

Ergebnis der Volumenzunahme in Prozent:

(Lagerzeit der Filmproben 1 h und 2 h )

| | | Benzin | Toluol | Trichlorethylen |
|---|---|---|---|---|
| Latex C | 1 h | 7.0 | 500.0 | 830.0 |
| | 8 h | 20.5 | 600.0 | 880.0 |
| Latex D | 1 h | 3.0 | 180.0 | 245.0 |
| | 8 h | 3.0 | 183.0 | 280.0 |

Beispiel 7

Zwei Latexschäume von einer Dichte von 0.093 g cm$^3$ werden in ihren Verformungs- und Rückerholungseigenschaften verglichen. Die Schäume werden nach dem sogenannten "non gel-Verfahren" unter Verwendung folgender Polymerdispersionen hergestellt:

Latex E:

Handelsübliche Polymerdispersion auf Basis Styrol-Butadien mit einer Feststoffkonzentration von 67 %.

Latex F:

Gemisch aus 127.0 Gew.-Tlen des Latex E und 35.2 Gew.-Tlen der unter Beispiel 1 beschriebenen Polycarbonatdispersion.

Die Vernetzung der Polymeren erfolgt mit einer üblichen Zinkoxid, Schwefel und Beschleuniger enthaltenden Vulkanisationspaste.

Die Prüfung der Schäume hat folgendes Ergebnis:

| | Verformungsdruck (25% Verformung) [kg 10cm$^2$] | Druckverformung (Belastung 20 kg/10 cm$^2$ [%] | Rückerholung nach 60 s) [%] |
|---|---|---|---|
| Latex E | 0.61 | 15 | 93 |
| Latex F | 0.91 | 18 | 96 |

## Ansprüche

1. Mischungen aus Elastomer-Latices und Dispersionen von aromatischen Polycarbonaten, aromatischen Polyestern und aromatischen Polyesterarbonaten.

2. Mischungen gemäß Anspruch 1, worin der Elastomer-Anteil 50 bis 99.9 Gew.-% und der Themoplast-Anteil 0.1 bis 50 Gew.-% bezogen auf Gesamtfeststoffgehalt beträgt.

3. Mischungen gemäß Ansprüche 1 und 2, worin die Elastomer-Komponenten eine Dispersion von Mischpolymerisaten aus Styrol und Butadien (SBR), aus Styrol, Butadien und Acrylnitril, aus Styrol, Butadien und Methacrylsäure, aus Styrol, Butadien, Acrylnitril und Methacrylsäure, aus Acrylnitril und Butadien (NBR), aus Acrylnitril, Butadien und Methacrylsäure aus Chlorbutadien und Methacrylsäure, aus dem Homopolymerisat aus 2-Chlorbutadien oder aus Naturkautschuk darstellt.

4. Mischung gemäß Ansprüche 1 bis 3, in denen die Thermoplast-Komponente eine Dispersion eines aromatischen Polycarbonats auf Basis von Bisphenol A, eines aromatischen Polyesters oder eines aromatischen Polyestercarbonats auf Basis Bisphenol A und Terephthal- bzw. Isophthalsäure darstellt.

5. Mischung aus einem Polychloropren-Latex und einer Dispersion eines aromatischen Polycarbonats mit einem Polychloropren-Anteil von 50 bis 99,9 Gew.-% und einem Polycarbonat-Anteil von 0,1 bis 50 Gew.-% bezogen auf Gesamtfeststoffgehalt.

6. Produkte gewonnen aus den Mischungen gemäß Ansprüchen 1 bis 5.

7. Vulkanisate gewonnen aus den Mischungen gemäß Ansprüchen 1 bis 5.